# EUROPEAN PATENT SPECIFICATION

(11) **EP 1 633 996 B1**
(45) Date of publication and mention of the grant of the patent: **18.11.2009**
(21) Application number: 03735992.4
(22) Date of filing: 16.06.2003
(51) Int. Cl.: F16H 37/08

(54) **ADDITIVE GEARSHIFT WITH DIFFERENTIAL GEARS**
ADDITIVE GETRIEBESCHALTUNG MIT DIFFERENZIALGETRIEBEN
DISPOSITIF DE CHANGEMENT DE VITESSE SUPPLEMENTAIRE A ENGRENAGE DIFFERENTIEL

(43) Date of publication of application: 15.03.2006
(73) Proprietor: Cavicchioli, Stefano, 10040 Rubiana (IT); Cavicchioli, Carlo, 10057 Sant' Ambrogio di Torino (IT)
(72) Inventor: Cavicchioli, Stefano, 10040 Rubiana (IT); Cavicchioli, Carlo, 10057 Sant' Ambrogio di Torino (IT)
(74) Representative: Martin, Philip John
(86) International application number: PCT/IT2003/000373
(87) International publication number: WO 2004/097259

(56) References cited:
- DE-A- 2 004 694
- DE-A- 10 138 547
- FR-A- 2 813 368
- US-A- 5 259 823

## Description

### TECHNICAL FIELD:

### MECHANICS

### BACKGROUND OF THE INVENTION:

Basically there are 3 main types of gearshifts: manually shifted gearbox with a maximum of about 20 speeds for trucks and 6 for cars; gearbox with planetary gear sets; and contiguously variable transmission (CVT).

Background prior art can be found in the closest prior art document US 5259823: Transmissions; FR 2813368: Systeme de Transmission a Rapport Variables et Continus; DE 2004694 Stufenlosses Überlagerungsgetriebe mit entlastetem Hilfsgetriebe; and DE 10138547: Getriebe.

### DISCLOSURE OF THE INVENTION:

This invention can be catalogued as a MECHANICAL GEARBOX, but compared with the usual gearbox, this one has nearly the advantages of a CVT's (continuously variable ratio transmission) for its high number of obtainable speeds. The speed-range is very wide (top gears very high and low gears very low), and the gap between them can be very small.

The invention is set out in the claims appended hereto.

This mechanism is extremely versatile and it can be configured in different ways by small variants in the construction stage. It is possible to obtain: all forward gears; one reverse gear and all restraining forward gears; more reverse gears, or as many reverse gears as forward gears with the same ratios.

Every single gear is selectable respecting a definite code to operate the clutches inside the gearbox, and the procedure is fast without the need of a main friction clutch. The neutral gear is also available.

This mechanism is able to output many speed-levels (under the same input). The number of speeds depends on the device complexity due to the quantity of differential gears in it. For example: 1 differential=3 speeds; 2 differential=7 speeds; 3 differential=15 speeds; 4 differential=31 speeds; and so on. In this application the task of the differential gear is simply to add the speed of two different input shafts rotating in the same direction, and return on a third shaft, the right value of speed with its proportional torque.

### BRIEF DESCRIPTION OF THE DRAWINGS:

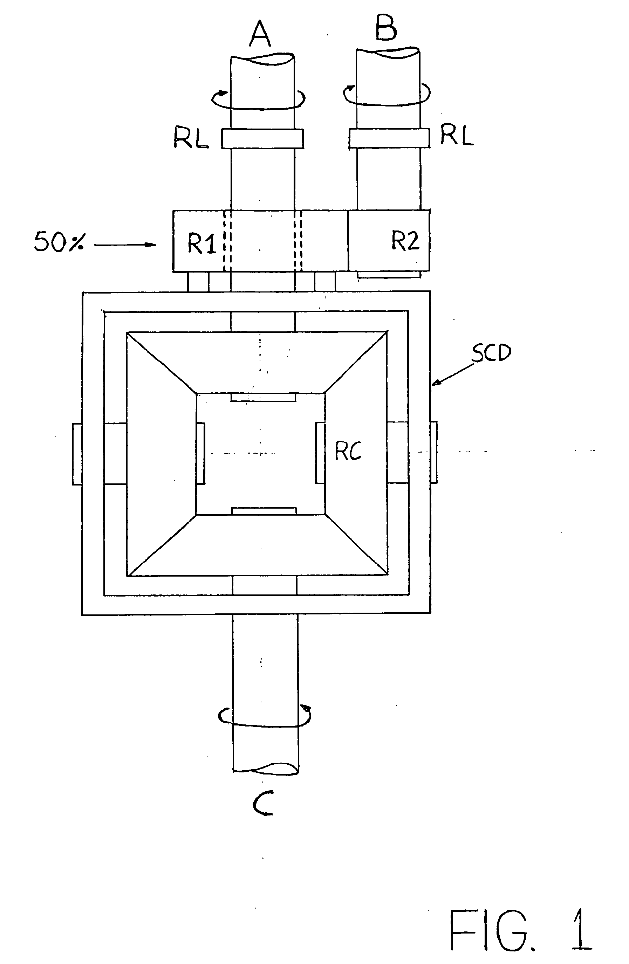

FIG. 1 illustrates a common differential gear now used to make additions. **A** and **B** are input shafts which rotate in the same direction. The speed of **B** has been reduced by 50% by gears **R1** and **R2**. **R1** is bored out in the center to allow free passage of the input shaft **A. R1** is in sympathy with the differential box designated **SCD.** Important parts are two free-wheels **RL** mounted on both input shafts in order to lock them in the direction opposite to the nominal rotating direction. This in the case one of two input shafts is stationary and there is a load on the output shaft **C;** without free-wheels the stationary input shaft would start rotating in the opposite direction and no torque would come from **C.**

The output **C** will be exactly the sum of **A** and **B** but with opposite rotating direction. **RC** are four conical gears. Free-wheels will not be mounted on the invention, it is just a way to solve the problem.

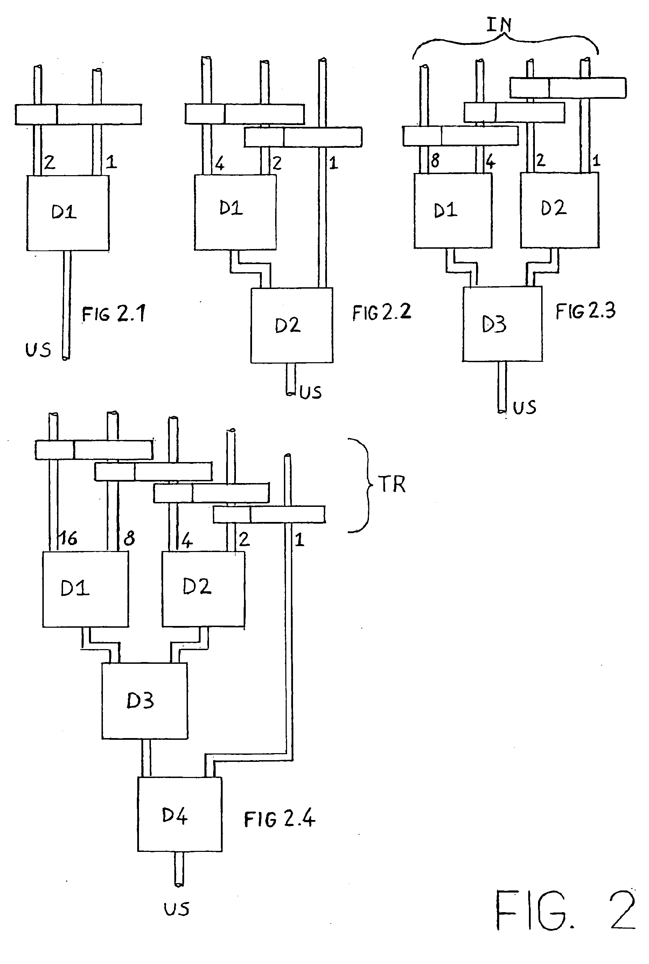

Now we can go on to an overall principle scheme of the gearbox. In FIG. 2 there are four examples showing how it would be possible to connect together 1 to 4 differential gears in order to get 3 to 31 different speed ratios. As can be seen, the second important part of the mechanism consists, in the gear train **TR** put before the differential gears **D.** Input shafts to the differential gears come from **TR** and respectively from left to right, each one rotates at the previous one's half speed. The input shafts to the differential gears are each labelled with the ratio numbers of their speed, relative to the slowest speed of all. The lowest number is 1 and it is also the lowest speed value inside the mechanism and the minimum increase unit of the final output **US.**

For purposes of explanation, from now on we shall take into account only the 3-differential gears and 4-input shafts gearbox shown in Figure 2.3 because of its avarage complexity and speeds number.

The example of FIG.2.3 shows a 15 speed gearbox. It provides 15 speeds with ratios from 1 to 15, increasing from speed to speed always by 1. There are four possible input shafts to the gearbox, **IN**. They must be connected to the gear train **TR.** Supposing to enter into the gearbox with an 80 rpm motor in junction with the input shaft 8, we'll get from the output shaft **US** a speed range from 10 to 150 rpm increasing from speed to speed by 10 rpm. The input shaft at the far right is always the minimum increase unit (as previously described). At this point, supposing to enter into the gearbox with an 80 rpm motor in junction with that shaft (designated 1), we'll get from output shaft **US** a speed range from 80 to 1200 rpm, but with an increment of 80 rpm.

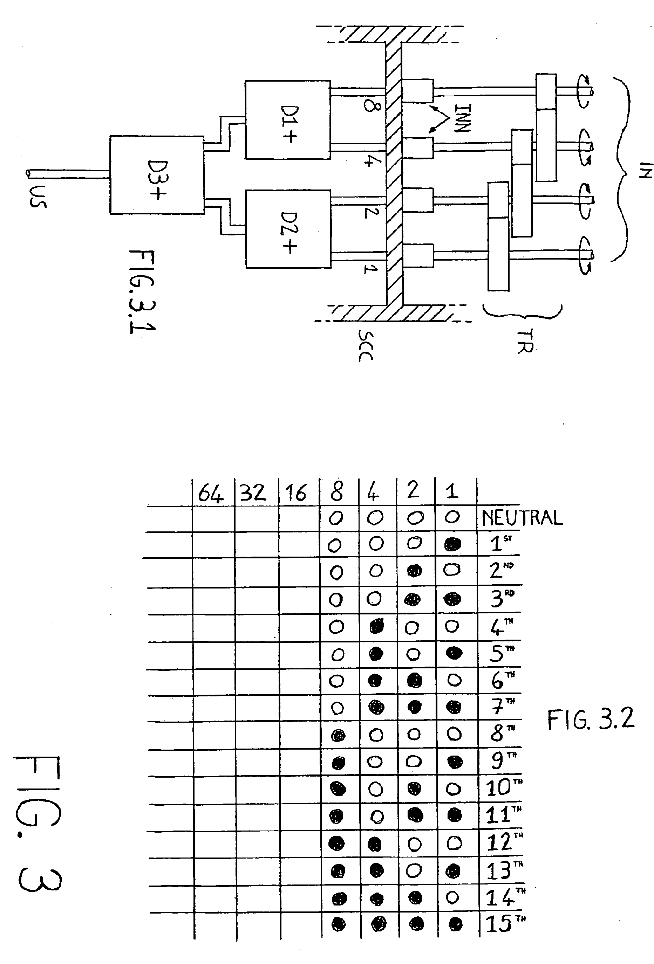

This invention could never work without clutches, not described yet, which are essential to engage any speed. As FIG.3.1 shows, now, there is a clutch **INN** on every single input shaft between the gear train **TR** and the differential gear **D**. Clutches cut or transmit the motion to the differential gears as needed, and combined together they determine every single possible speed. Every single possible combination is assured by a simple table (FIG.3.2), calculated on the grounds of the binary number system. The table shows clutch states according to the speed to be engaged. On the horizontal axis there is every single input shaft; on the vertical axis there are the speed numbers. The black dot indicates motion transmission through the clutch, and the white dot indicates no motion transmission.

The clutches used must be DUAL-ACTION type. This means that they must have two different states: the first one is motion transmission; the second one is no motion transmission, but this one must also lock, in both rotating directions, the part of the shaft entering into the differential gear and get it in sympathy with the gearbox designated **SCC** (FIG.3.1).

Up to now, all that has been explained is just a theoretical explanation of the invention. Its practical realization will be different from some points of view due to the absolute necessity to respect the rotating directions of every single shaft inside the gearbox. It is very important for the right operation of all mechanism.

According to the rotating directions of the two input shafts in a differential gear used to make additions (as FIG.1), from the output shaft **C** we can get an addition or a subtraction. Now if we shape the gearbox combining additions and subtractions, as output we obtain a speed range including reverse gear. It is also possible to obtain many different reverse gears, but the total number of speeds is 15 plus a neutral gear. The obtainable configurations are various.

From now on for purpose of explanation the 3 differential gears inside the gearbox we are talking about are all addition type ("+" sigh in FIG.3.1. Consequently all forward 15 speeds are available.

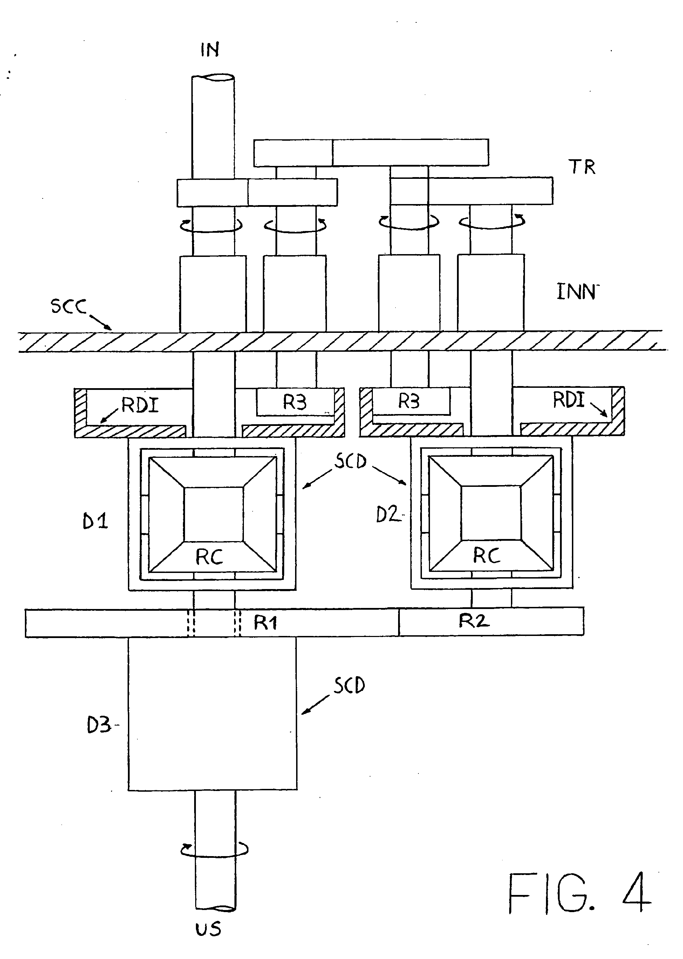

In FIG.4 shows an overall view of the mechanism as it can work. There are some changes compared with FIG.1 and FIG.3.1: on the gear train **TR** and on both internal gears **RDI** of the differential gears **D1** and **D2**. The reason is simple. In FIG.1 input shafts **A** and **B** rotate in the same direction (obligatory condition to obtain additions). Nevertheless, a 4-shafts gear train as FIG.3.1 inverts the rotating direction from a shaft to another, so we could never obtain two adjoining shafts with the same rotating direction. That is why the internal gear is necessary: like chains or belts, it does not reverse the motion.

However, using this type of gear it is not possible to obtain a 50% reduction ratio (as FIG.1), between **R3** and **RDI** because of the encumbrance of the shaft going into the differential gear. So we can obtain a one-third reduction ratio, but the difference must be compensated by changing gear train ratios. On **TR** we shall obtain an irregular sequence of different ratios that, if correctly calculated, are equivalent to the theoretical ones in FIG.3.1.

Gears **R1** and **R2** have a 50% reduction ratio. **R1** is in sympathy with the differential box of **D3,** and it is bored out in the center to allow free passage to the shaft coming from **D1.** It is the same with **RDI. SCC** is the gearbox that clutches **INN** (not drawn in every detail) are locked to. **SCD** are differential boxes that gears **RDI** and **R1** are in sympathy with. The differential gear **D3** has not been drawn in every detail, but it is exactly identical to **D1** and **D2**. **RC** are 4 conical gears inside each differential box. **US** is the final output shaft, and it rotates at the same direction as the input shaft **IN**.

**BEST MODE FOR CARRYING OUT THE INVENTION:** Make an agreement with a metal and mechanical works.
**INDUSTRIAL APPLICABILITY:** All motor vehicles and industrial machineries.

## Claims

1. A gearbox comprising:
a first input shaft (2; IN) being driven in use at a rotational speed V;
a second input shaft (1);
a gear train (TR) interconnecting said first and second input shafts and for driving said second input shaft at a rotational speed which is approximately 0.5V;
a dual-action clutch (INN) associated with each of said input shafts, each of said clutches having a first state in which rotary motion is transmitted as an output, and a second state in which no rotary motion is transmitted; and
a first differential (D1) for receiving the rotary motion outputted by one or more of said clutches, and for transmitting rotary motion to an output shaft (US);
wherein said output shaft is driven by said differential at a rotational speed which is approximately equal to:
0, if the clutches associated with said first and second input shafts are in said second state;
V, if the clutch associated with said first input shaft is in said first state and the clutch associated with said second input shaft is in said second state;
0.5V, if the clutch associated with said first input shaft is in said second state and the clutch associated with said second input shaft is in said first state; or
1.5V, if the clutches associated with said first and second input shafts are in said first state.

2. A gearbox according to claim 1, further comprising:
a third input shaft, said gear train interconnecting said first (4), second (2) and third (1) input shafts for driving the third input shaft at a rotational speed which is approximately 0.25V;
a dual-action clutch associated with said third input shaft; and
a second differential (D2), said first differential receiving an output from the clutches associated with the first and second input shafts, and the second differential receiving an output from the clutch associated with said third input shaft and an output from said first differential;
wherein said output shaft is driven by said second differential within a rotational speed range of approximately 0 to 1.75V, depending on the state of said clutches.

3. A gearbox according to claim 2, wherein the rotational speed of said output shaft varies within said rotational speed range, according to the state of said clutches, in increments equal to 0.25V.

4. A gearbox according to claim 1, further comprising:
a third input shaft and a fourth input shaft, said gear train interconnecting said first (8), second (4), third (2) and fourth (1) input shafts for driving the third input shaft at a rotational speed which is approximately 0.25V and for driving said fourth input shaft at a rotational speed which is approximately 0.125V;
a dual-action clutch associated with said third input shaft, and a dual-action clutch associated with said fourth input shaft; and
a second differential (D2) and a third differential (D3), said first differential receiving an output from the clutches associated with the first and second input shafts, and the second differential receiving an output from the clutch associated with said third and fourth input shafts, and said third differential receiving an output from said first and second differentials;
wherein said output shaft is driven by an output of said third differential within a rotational speed range of approximately 0 to 1.875V, depending on the state of said clutches.

5. A gearbox according to claim 4, wherein the rotational speed of said output shaft varies within said rotational speed range, according to the state of said clutches, in increments equal to 0.125V.

6. A gearbox according to claim 1, further comprising:
a third, a fourth and a fifth input shaft, said gear train interconnecting said first (16), second (8), third (4), fourth (2) and fifth (1) input shafts for driving the third input shaft at a rotational speed which is approximately 0.25V, for driving said fourth input shaft at a rotational speed which is approximately 0.125V, and for driving said fifth input shaft at a rotational speed which is approximately 0.0625V;
dual-action clutches associated with said third, fourth and fifth input shafts;
a second (D2), a third (D3), and a fourth differential (D4), said first differential receiving an output from the dual-clutches associated with the first and second input shafts, the second differential receiving an output from the clutch associated with said third and fourth input shafts, the third differential receiving an output from said first and second differentials, and the fourth differential receiving an output from said third differential and an output from the dual-clutch associated with said fifth input shaft;
wherein said output shaft is driven by an output of said fourth differential within a rotational speed range of approximately 0 to 1.94V, depending on the state of said clutches.

7. A gearbox according to claim 6, wherein the rotational speed of said output shaft varies within said rotational speed range, according to the state of said clutches, in increments equal to 0.0625V.

## Patentansprüche

1. Getriebe, das aufweist:
eine erste Antriebswelle (2; IN), die bei Benutzung mit einer Drehzahl V angetrieben wird;
eine zweite Antriebswelle (1);
einen Getriebezug (TR), der die erste und die zweite Antriebswelle verbindet und für das Antreiben der zweiten Antriebswelle mit einer Drehzahl, die annähernd 0,5 V beträgt;
eine doppeltwirkende Kupplung (INN), die mit einer jeden der Antriebswellen verbunden ist, wobei eine jede der Kupplungen einen ersten Zustand, in dem die Drehbewegung als ein Abtrieb übertragen wird, und einen zweiten Zustand aufweist, in dem keine Drehbewegung übertragen wird; und
ein erstes Differential (D1) für das Aufnehmen der Drehbewegung, die von einer oder mehreren der Kupplungen ausgegeben wird, und für das Übertragen der Drehbewegung auf eine Abtriebswelle (US);
wobei die Abtriebswelle durch das Differential mit einer Drehzahl angetrieben wird, die annähernd gleich ist:
0, wenn die Kupplungen, die mit der ersten und der zweiten Antriebswelle verbunden sind, im zweiten Zustand sind;
V, wenn die Kupplung, die mit der ersten Antriebswelle verbunden ist, im ersten Zustand ist, und die Kupplung, die mit der zweiten Antriebswelle verbunden ist, im zweiten Zustand ist;
0,5 V, wenn die Kupplung, die mit der ersten Antriebswelle verbunden ist, im zweiten Zustand ist, und die Kupplung, die mit der zweiten Antriebswelle verbunden ist, im ersten Zustand ist; oder
1,5 V, wenn die Kupplungen, die mit der ersten und der zweiten Antriebswelle verbunden sind, im ersten Zustand sind.

2. Getriebe nach Anspruch 1, das außerdem aufweist:
eine dritte Antriebswelle, wobei der Getriebezug die erste (4), zweite (2) und dritte (1) Antriebswelle für das Antreiben der dritten Antriebswelle mit einer Drehzahl verbindet, die annähernd 0,25 V beträgt;
eine doppeltwirkende Kupplung, die mit der dritten Antriebswelle verbunden ist; und
ein zweites Differential (D2), wobei das erste Differential einen Abtrieb von den Kupplungen empfängt, die mit der ersten und der zweiten Antriebswelle verbunden sind, und wobei das zweite Differential einen Abtrieb von der Kupplung, die mit der dritten Antriebswelle verbunden ist, und einen Abtrieb vom ersten Differential empfängt;
wobei die Abtriebswelle mittels des zweiten Differentials innerhalb eines Drehzahlbereichs von annähernd 0 bis 1,75 V in Abhängigkeit vom Zustand der Kupplungen angetrieben wird.

3. Getriebe nach Anspruch 2, bei dem die Drehzahl der Abtriebswelle innerhalb des Drehzahlbereichs entsprechend dem Zustand der Kupplungen in Schritten von gleich 0,25 V variiert.

4. Getriebe nach Anspruch 1, das außerdem aufweist:
eine dritte Antriebswelle und eine vierte Antriebswelle, wobei der Getriebezug die erste (8), zweite (4), dritte (2) und vierte (1) Antriebswelle für das Antreiben der dritten Antriebswelle mit einer Drehzahl, die annähernd 0,25 V beträgt, und für das Antreiben der vierten Antriebswelle mit einer Drehzahl verbindet, die annähernd 0,125 V beträgt;
eine doppeltwirkende Kupplung, die mit der dritten Antriebswelle verbunden ist und eine doppeltwirkende Kupplung, die mit der vierten Antriebswelle verbunden ist; und
ein zweites Differential (D2) und ein drittes Differential (D3), wobei das erste Differential einen Abtrieb von den Kupplungen empfängt, die mit der ersten und der zweiten Antriebswelle verbunden sind, und wobei das zweite Differential einen Abtrieb von der Kupplung empfängt, die mit der dritten und der vierten Antriebswelle verbunden ist, und wobei das dritte Differential einen Abtrieb vom ersten und zweiten Differential empfängt;
wobei die Abtriebswelle mittels eines Abtriebs des dritten Differentials innerhalb eines Drehzahlbereichs von annähernd 0 bis 1,875 V in Abhängigkeit vom Zustand der Kupplungen angetrieben wird.

5. Getriebe nach Anspruch 4, bei dem die Drehzahl der Abtriebswelle innerhalb des Drehzahlbereichs entsprechend dem Zustand der Kupplungen in Schritten von gleich 0,125 V variiert.

6. Getriebe nach Anspruch 1, das außerdem aufweist:
eine dritte, eine vierte und eine fünfte Antriebswelle, wobei der Getriebezug die erste (16), zweite (8), dritte (4), vierte (2) und fünfte (1) Antriebswelle für das Antreiben der dritten Antriebswelle mit einer Drehzahl, die annähernd 0,25 V beträgt, für das Antreiben der vierten Antriebswelle mit einer Drehzahl, die annähernd 0,125 V beträgt, und für das Antreiben der fünften Antriebswelle mit einer Drehzahl verbindet, die annähernd 0,0625 V beträgt;
doppeltwirkende Kupplungen, die mit der dritten, vierten und fünfte Antriebswelle verbunden sind;
ein zweites (D2), ein drittes (D3) und ein viertes Differential (D4), wobei das erste Differential einen Abtrieb von den doppeltwirkenden Kupplungen empfängt, die mit der ersten und der zweiten Antriebswelle verbunden sind, das zweite Differential einen Abtrieb von der Kupplung empfängt, die mit der dritten und der vierten Antriebswelle verbunden ist, das dritte Differential einen Abtrieb vom ersten und zweiten Differential empfängt, und das vierte Differential einen Abtrieb vom dritten Differential und einen Abtrieb von der doppeltwirkenden Kupplung empfängt, die mit der fünften Antriebswelle verbunden ist;
wobei die Abtriebswelle mittels eines Abtriebs des vierten Differentials innerhalb eines Drehzahlbereichs von annähernd 0 bis 1,94 V in Abhängigkeit vom Zustand der Kupplungen angetrieben wird.

7. Getriebe nach Anspruch 6, bei dem die Drehzahl der Abtriebswelle innerhalb des Drehzahlbereichs entsprechend dem Zustand der Kupplungen in Schritten von gleich 0,0625 V variiert.

## Revendications

1. Boîte de vitesses comprenant:
un premier arbre d'entrée (2; IN) entraîné, lors de l'utilisation, à une vitesse de rotation V;
un deuxième arbre d'entrée (1);
un train d'engrenages (TR) interconnectant lesdits premier et deuxième arbres d'entrée et destiné à entraîner ledit deuxième arbre d'entrée à une vitesse de rotation égale à environ 0,5V;
un embrayage à double action (INN) associé à chacun desdits arbres d'entrée, chacun desdits embrayages ayant un premier état dans lequel un mouvement de rotation est transmis en tant que sortie et un second état dans lequel aucun mouvement de rotation n'est transmis; et
un premier différentiel (D1) pour recevoir le mouvement de rotation délivré en sortie par un ou plusieurs desdits embrayages et pour transmettre le mouvement de rotation à un arbre de sortie (US);
dans laquelle ledit arbre de sortie est entraîné par ledit différentiel à une vitesse de rotation qui est à peu près égale à:
0 si les embrayages associés audits premier et deuxième arbres d'entrée sont dans ledit second état;
V si l'embrayage associé audit premier arbre d'entrée est dans ledit premier état et l'embrayage associé audit deuxième arbre d'entrée est dans ledit second état;
0,5V si l'embrayage associé audit premier arbre d'entrée est dans ledit second état et l'embrayage associé audit deuxième arbre d'entrée est dans ledit premier état; ou
1,5V si les embrayages associés auxdits premier et deuxième arbres d'entrée sont dans ledit premier état.

2. Boîte de vitesses selon la revendication 1, comprenant, en outre:
un troisième arbre d'entrée, ledit train d'engrenages interconnectant lesdits premier (4), deuxième (2) et troisième (1) arbres d'entrée pour entraîner le troisième arbre d'entrée à une vitesse de rotation qui est égale à environ 0,25 V;
un embrayage à double action associé audit troisième arbre d'entrée; et
un deuxième différentiel (D2), ledit premier différentiel recevant une sortie des embrayages associés aux premier et deuxième arbres d'entrée et le deuxième différentiel recevant une sortie de l'embrayage associé audit troisième arbre d'entrée et une sortie dudit premier différentiel;
dans laquelle ledit arbre de sortie est entraîné par ledit deuxième différentiel à l'intérieur d'une gamme de vitesses de rotation allant d'environ 0V à environ 1,75V, en fonction de l'état desdits embrayages.

3. Boîte de vitesses selon la revendication 2, dans laquelle la vitesse de rotation dudit arbre de sortie varie à l'intérieur de ladite gamme de vitesses de rotation, en fonction de l'état desdits embrayages, par incréments égaux à 0,25V.

4. Boîte de vitesses selon la revendication 1, comprenant, en outre:
un troisième arbre de sortie et un quatrième arbre de sortie, ledit train d'engrenages interconnectant lesdits premier (8), deuxième (4), troisième (2) et quatrième (1) arbres d'entrée pour entraîner le troisième arbre d'entrée à une vitesse de rotation qui est égale à environ 0 ,25V et pour entraîner ledit quatrième arbre d'entrée à une vitesse de rotation qui est égale à environ 0,125V;
un embrayage à double action associé audit troisième arbre d'entrée et un embrayage à double action associé audit quatrième arbre d'entrée; et
un deuxième différentiel (D2) et un troisième différentiel (D3), ledit premier différentiel recevant une sortie des embrayages associés aux premier et deuxième arbres d'entrée et le deuxième différentiel recevant une sortie de l'embrayage associé auxdits troisième et quatrième arbres d'entrée et ledit troisième différentiel recevant une sortie desdits premier et deuxième différentiels;
dans laquelle ledit arbre de sortie est entraîné par une sortie dudit troisième différentiel à l'intérieur d'une gamme de vitesses de rotation allant d'environ 0V à environ 1,875V, en fonction de l'état desdits embrayages.

5. Boîte de vitesses selon la revendication 4, dans laquelle la vitesse de rotation dudit arbre de sortie varie à intérieur de ladite gamme de vitesses de rotation, en fonction de l'état desdits embrayages, par incréments égaux à 0,125V.

6. Boîte de vitesses selon la revendication 1, comprenant, en outre:
un troisième, un quatrième et un cinquième arbres d'entrée, ledit train d'engrenages interconnectant lesdits premier (16), deuxième (8), troisième (4), quatrième (2) et cinquième (1) arbres d'entrée pour entraîner le troisième arbre d'entrée à une vitesse de rotation qui est égale à environ 0,25V, pour entraîner ledit quatrième arbre d'entrée à une vitesse de rotation qui est égale à environ 0,125V et pour entraîner ledit cinquième arbre d'entrée à une vitesse de rotation qui est égale à environ 0,0625V;
des embrayages à double action associés auxdits troisième, quatrième et cinquième arbres d'entrée;
un deuxième (D2), un troisième (D3) et un quatrième (D4) différentiel, ledit premier différentiel recevant une sortie des embrayages à double action associés aux premier et deuxième arbres d'entrée, le deuxième différentiel recevant une sortie de l'embrayage associé auxdits troisième et quatrième arbres d'entrée, le troisième différentiel recevant une sortie desdits premier et deuxième différentiels et le quatrième différentiel recevant une sortie dudit troisième différentiel et une sortie de l'embrayage à double action associé audit cinquième arbre d'entrée;
dans laquelle ledit arbre de sortie est entraîné par une sortie dudit quatrième différentiel à l'intérieur d'une gamme de vitesses de rotation allant d'environ 0V à environ 1,94V, en fonction de l'état desdits embrayages.

7. Boîte de vitesses selon la revendication 6, dans laquelle la vitesse de rotation dudit arbre de sortie varie à l'intérieur de ladite gamme de vitesses de rotation, en fonction de l'état desdits embrayages, par incréments égaux à 0,0625V.
